(19) Europäisches Patentamt
European Patent Office
Office européen des brevets

(11) **EP 4 283 540 A1**

(12) **EUROPEAN PATENT APPLICATION**

(43) Date of publication:
**29.11.2023 Bulletin 2023/48**

(21) Application number: **23157950.9**

(22) Date of filing: **22.02.2023**

(51) International Patent Classification (IPC):
**G06Q 10/04** (2023.01)

(52) Cooperative Patent Classification (CPC):
**G06Q 10/04; G06N 3/09; G06Q 30/0283;**
G06N 3/0499

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.05.2022 JP 2022086979**

(71) Applicant: **FUJITSU LIMITED**
**Kawasaki-shi, Kanagawa 211-8588 (JP)**

(72) Inventors:
• **MITOMI, Tatsuya**
**Kawasaki-shi, Kanagawa, 211-8588 (JP)**
• **SEGAWA, Eigo**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **LEARNING METHOD AND PROGRAM OF VALUE CALCULATION MODEL AND SELECTION PROBABILITY ESTIMATION METHOD**

(57) Provided is a learning method of a value calculation model for calculating a value of an option used when a person acts from an attribute value of the option, implemented by a computer, the learning method including: acquiring input data in which a selection probability indicating a rate at which each option is selected from a plurality of options and attribute values of the plurality of options when the selection probability is obtained are associated with each other (S10, S12); and acquiring, for each combination of two options that can be extracted from the plurality of options, a relationship between selection probabilities of the two options included in each combination from the input data, and adjusting the value calculation model so that a relationship between values calculated when attribute values of the two options included in each combination are input to the value calculation model and a relationship between the selection probabilities corresponding to each combination are close to each other (S20).

FIG. 10

EP 4 283 540 A1

**Description**

FIELD

A certain aspect of embodiments described herein relates to a learning method and program of a value calculation model and a selection probability estimation method.

BACKGROUND

It is desired to control the transportation of people to reduce the emission amount of $CO_2$ and alleviating traffic congestion. For example, when there is a plurality of transportation options for a pair (OD) of an origin (O) and a destination (D), changing the fare for each transportation option will cause people to change the transportation option that they select. Therefore, by setting the fare for each transportation option appropriately, it is possible to appropriately control the transportation of people.

Conventionally, when predicting at what rate each of options having attribute values of different scales such as cost and time is selected, a numerical value (value) that can express each option with a single scale is obtained by inputting the attribute values into a predetermined formula (for example, a linear formula). Then, the degree to which each option is selected (selection probability) is predicted from the relative relationship between the obtained values of the options. Note that the art related to the present disclosure is also disclosed in Japanese Patent Application Laid-Open No. 2015-114988.

SUMMARY

To learn a value calculation model for calculating a value from attribute values by machine learning or the like, data in which the attribute values of each of options and the value of each of the options are associated with each other is necessary as learning data. However, only the rate at which each option was selected (selection probability) can be obtained as the observed value of each option. Even when the selection probability of each option is obtained, the value of each option cannot be obtained from the selection probability, and thus the selection probability alone is insufficient as learning data.

In one aspect, an object of the present disclosure is to provide a learning method and program of a value calculation model capable of learning a value calculation model for calculating the values of options used when people act. Another object of the present disclosure is to provide a selection probability estimation method capable of accurately estimating the selection probabilities of options.

According to an aspect of the embodiments, there is provided a learning method of a value calculation model for calculating a value of an option used when a person acts from an attribute value of the option, implemented by a computer, the learning method including: acquiring input data in which a selection probability indicating a rate at which each option is selected from a plurality of options and attribute values of the plurality of options when the selection probability is obtained are associated with each other; and acquiring, for each combination of two options that can be extracted from the plurality of options, a relationship between selection probabilities of the two options included in each combination from the input data, and adjusting the value calculation model so that a relationship between values calculated when attribute values of the two options included in each combination are input to the value calculation model and a relationship between the selection probabilities corresponding to each combination are close to each other.

BRIEF DESCRIPTION OF DRAWINGS

FIG. 1A to FIG. 1C are diagrams for describing an outline of a process executed by an information processing apparatus in accordance with an embodiment.
FIG. 2 illustrates a hardware configuration of the information processing apparatus in accordance with the embodiment.
FIG. 3 is a functional block diagram of the information processing apparatus of FIG. 2.
FIG. 4A illustrates an example of transportation data, and FIG. 4B illustrates an example of selection probability data.
FIG. 5 illustrates an example of attribute value data.
FIG. 6 illustrates an example of learning data.
FIG. 7 is a diagram illustrating an input and an output of a value calculation model.
FIG. 8A illustrates an example of attribute value data (object OD), and FIG. 8B illustrates an example of target selection probability data.

FIG. 9 is a diagram for describing an outline of learning by a model learning unit.

FIG. 10 illustrates an overview of a learning device of the model learning unit.

FIG. 11 is a flowchart illustrating an example of a value calculation model learning process.

FIG. 12 is a flowchart illustrating a detailed process of step S16 in FIG. 11.

FIG. 13 is a flowchart illustrating a detailed process of step S20 in FIG. 11.

FIG. 14 is a flowchart illustrating an example of a billing amount determination process.

FIG. 15 is a diagram for describing an outline of learning by a model learning unit in accordance with a variation.

FIG. 16 is a diagram illustrating an overview of a learning device of the model learning unit in accordance with the variation.

DESCRIPTION OF EMBODIMENTS

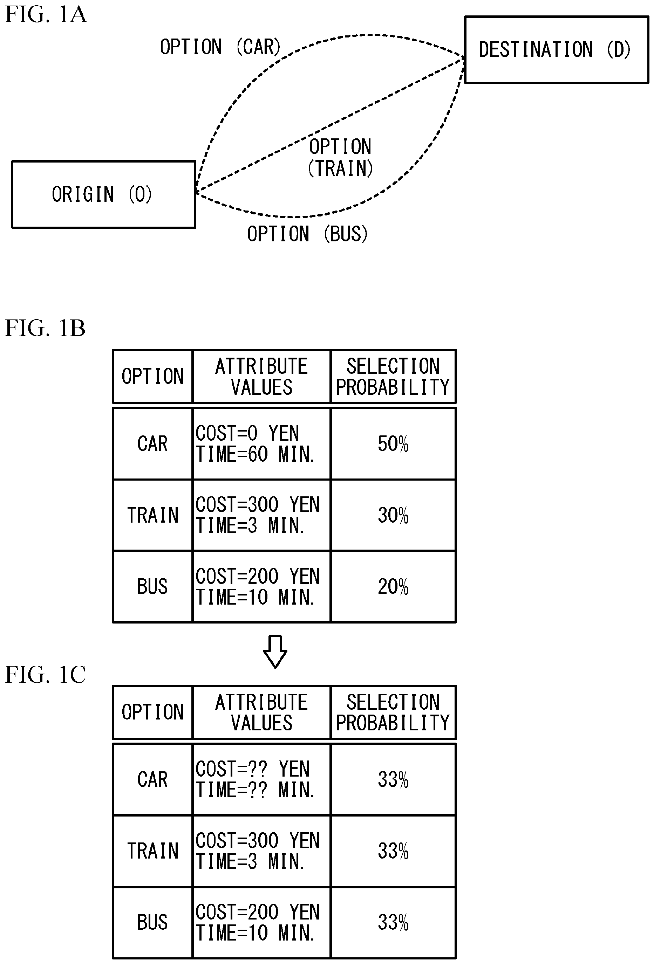

Hereinafter, an embodiment will be described in detail with reference to FIG. 1 to FIG. 14.

FIG. 1A to FIG. 1C are diagrams for describing an outline of a process executed by an information processing apparatus 10 in accordance with the present embodiment. For example, as illustrated in FIG. 1A, there is a pair (OD) of an origin (O) and a destination (D), and there are an option (car), an option (train), and an option (bus) as the options of transportation between the origin and the destination. Further, as illustrated in FIG. 1B, cost and time are set as attribute values for each option. In this case, it is assumed that 50% of people who move between OD select the option (car), 30% of the people select the option (train), and 20% of the people select the option (bus). In the example of FIG. 1B, since many people select the option (car), the road becomes congested.

The information processing apparatus 10 of the present embodiment is an apparatus that determines and outputs an appropriate toll (billing amount) when a user wants to set road pricing (toll) for eliminating congestion on a road. For example, as illustrated in FIG. 1C, when the user inputs an instruction to adjust the selection probabilities of the option (car), the option (train), and the option (but) to be the same (33%), the information processing apparatus 10 calculates and outputs how much the cost (billing amount) required to use the road should be to adjust the selection probabilities to be the same.

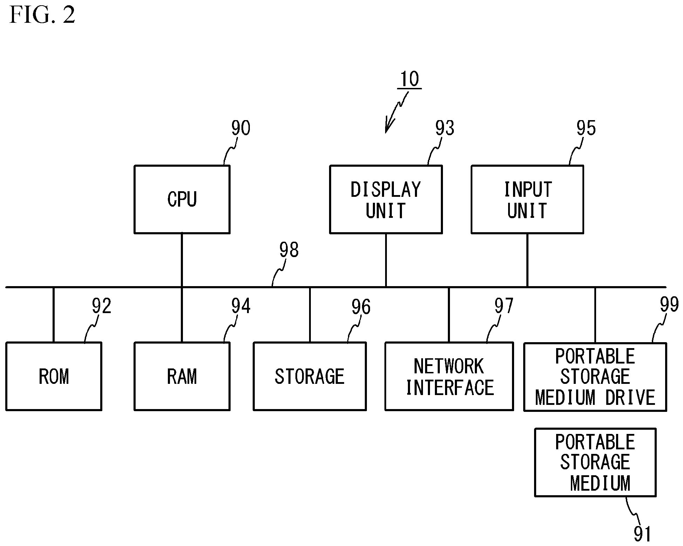

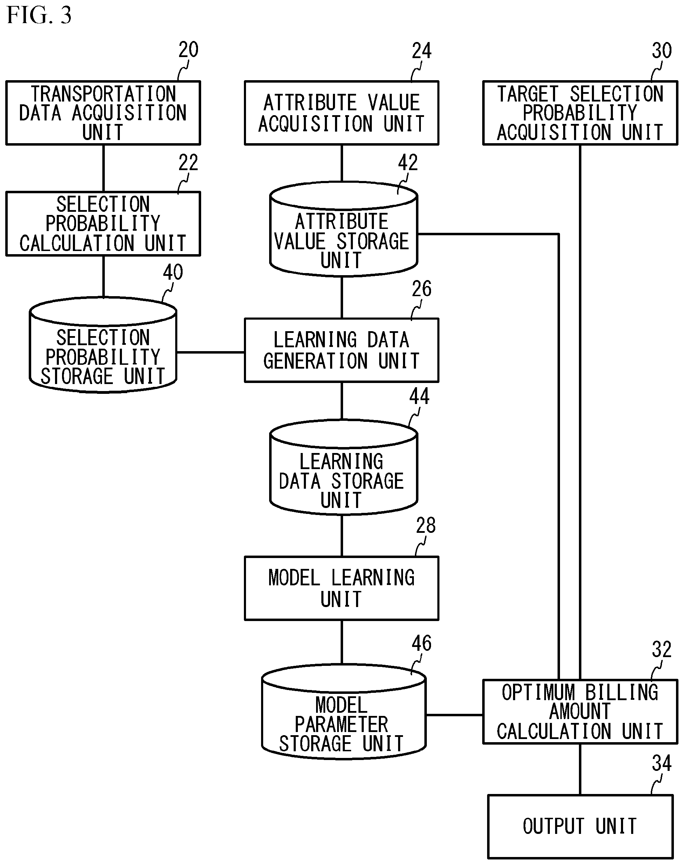

FIG. 2 illustrates a hardware configuration of the information processing apparatus 10. As illustrated in FIG. 2, the information processing apparatus 10 includes a central processing unit (CPU) 90, a read only memory (ROM) 92, a random access memory (RAM) 94, a storage (a solid state drive (SSD) or a hard disk drive (HDD)) 96, a network interface 97, a display unit 93, an input unit 95, a portable storage medium drive 99, and the like. These components of the information processing apparatus 10 are connected to a bus (data transmission path) 98. In the information processing apparatus 10, the CPU 90 executes a program (including a learning program of a value calculation model) stored in the ROM 92 or the storage 96, or a program read from a portable storage medium 91 by the portable storage medium drive 99 to implement the function of each unit illustrated in FIG. 3. FIG. 3 also illustrates various storage units stored in the storage 96 and the like. The function of each unit in FIG. 3 may be implemented by an integrated circuit such as an application specific integrated circuit (ASIC) or a field programmable gate array (FPGA).

As illustrated in FIG. 3, when the CPU 90 executes the program, the information processing apparatus 10 functions as a transportation data acquisition unit 20, a selection probability calculation unit 22, an attribute value acquisition unit 24, a learning data generation unit 26, a model learning unit 28, a target selection probability acquisition unit 30, an optimum billing amount calculation unit 32, and an output unit 34. Hereinafter, each unit will be described in detail.

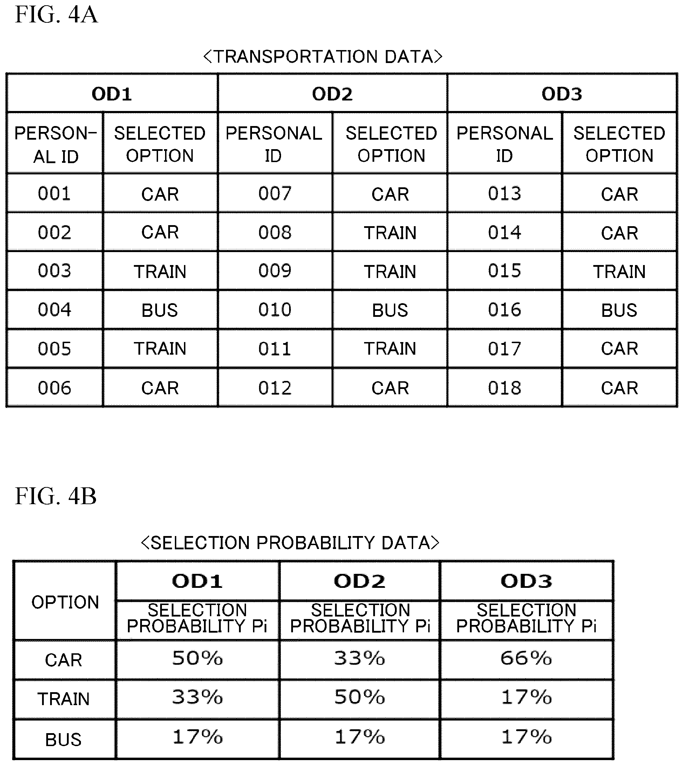

The transportation data acquisition unit 20 acquires transportation data illustrated in FIG. 4A. Here, the transportation data in FIG. 4A records which option (car, train, bus) was used (selected) by people who have moved through each of three types of ODs. Although the "selected option" is recorded in association with the "personal ID" in FIG. 4A, the "personal ID" may not be necessarily recorded. That is, the form of the transportation data is not limited as long as the number of times of selection of each option can be known.

The selection probability calculation unit 22 calculates the rate at which each option (car, train, bus) was selected for each OD from the transportation data of FIG. 4A, and generates selection probability data illustrated in FIG. 4B. From the selection probability data in FIG. 4B, it can be seen that 50%, 33%, and 17% of the people who moved through OD1 selected cars, trains, and buses, respectively. The selection probability calculation unit 22 stores the generated selection probability data (FIG. 4B) in a selection probability storage unit 40.

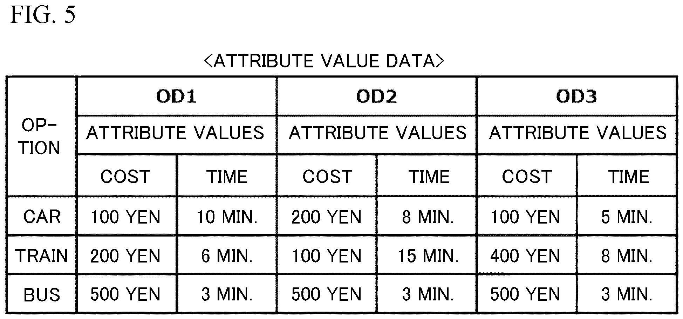

The attribute value acquisition unit 24 acquires attribute values (in the present embodiment, cost and time) of each option for each OD. Here, the cost is a fare when using a train or a bus, a toll for a road when using a car, or the like. Time is the time required to move between OD. The attribute value acquisition unit 24 acquires attribute value data illustrated in FIG. 5 input by the user, for example, and stores the acquired data in an attribute value storage unit 42. In the case of the attribute value data of FIG. 5, for example, the attribute values of a car for OD1 are cost = 100 yen and time = 10 minutes, the attribute values of a train are cost = 200 yen and time = 6 minutes, and the attribute values of a bus are cost = 500 yen and time = 3 minutes. Since the selection probabilities of the selection probability data of FIG.

4B and the attribute values of the attribute value data of FIG. 5 exist for each option for each OD, it can be said that they are associated with each other on a one to-one basis. In other words, it can be said that the selection probability data and the attribute value data are input data in which a selection probability is associated with the attribute values of each option when the selection probability is obtained.

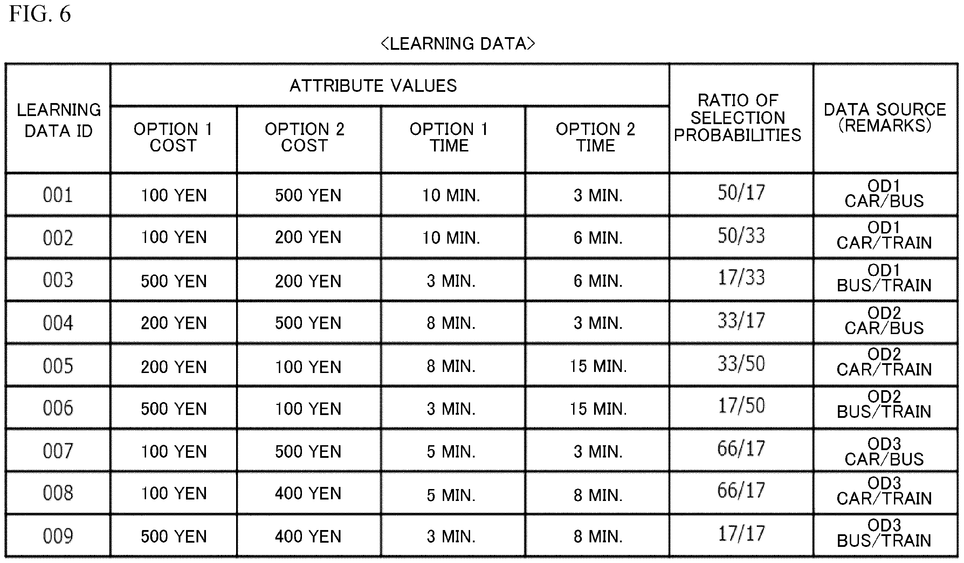

The learning data generation unit 26 generates learning data using the selection probability data (FIG. 4B) stored in the selection probability storage unit 40 and the attribute value data (FIG. 5) stored in the attribute value storage unit 42. The learning data is data illustrated in FIG. 6. The learning data generation unit 26 generates learning data corresponding to each combination of two options (car/bus, car/train, bus/train) for OD1 (learning data ID = 001 to 003). The learning data generation unit 26 also generates learning data corresponding to each combination of two options (car/bus, car/train, bus/train) for OD2 and OD3 (learning data IDs = 004 to 006, 007 to 009). In each piece of learning data, the attribute values of two options included in a combination and the ratio of the selection probabilities of the two options are associated with each other. For example, in the case of the combination of the option (car) and the option (bus) for OD1 (learning data ID = 001), the ratio of the selection probability of the car (50%) to the selection probability of the bus (17%) is 50/17. The learning data generation unit 26 stores the generated learning data (FIG. 6) in a learning data storage unit 44. Although FIG. 6 also includes information of "data source (remarks)", since this information is reference information, it may not be included in the actual learning data.

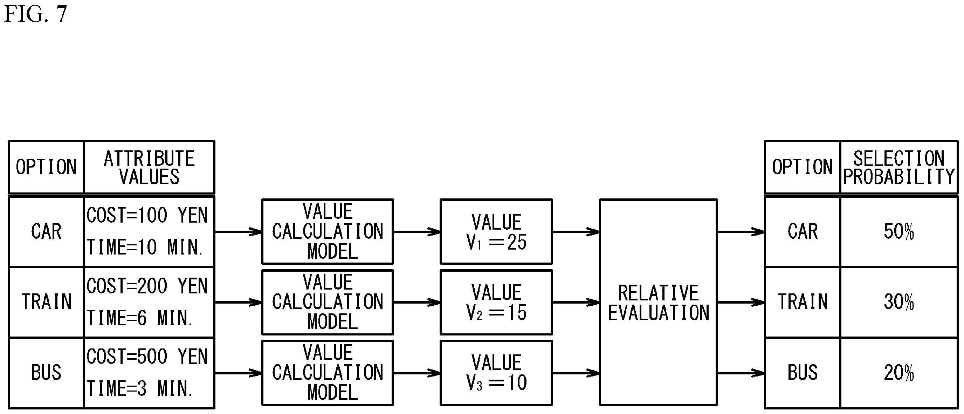

The model learning unit 28 executes a process of learning the value calculation model using the learning data stored in the learning data storage unit 44. FIG. 7 illustrates inputs to the value calculation model and outputs of the value calculation model. As illustrated in FIG. 7, the value calculation model is a model capable of calculating and outputting a numerical value (value) expressed with a single scale by inputting attribute values with different scales such as cost and time. In the present embodiment, the value calculation model is a model using a neural network called Multi-Layer Perceptron (MI,P). As the MLP, a three-layer perceptron having two input layer nodes, one output layer node, and six intermediate layer nodes can be used. The two input layer nodes correspond to the attribute values (cost and time) of the option, respectively, and the one output layer node corresponds to the value of the option. Details of the model learning unit 28 will be described later. The model learning unit 28 stores the parameters of the value calculation model obtained by the learning process in a model parameter storage unit 46.

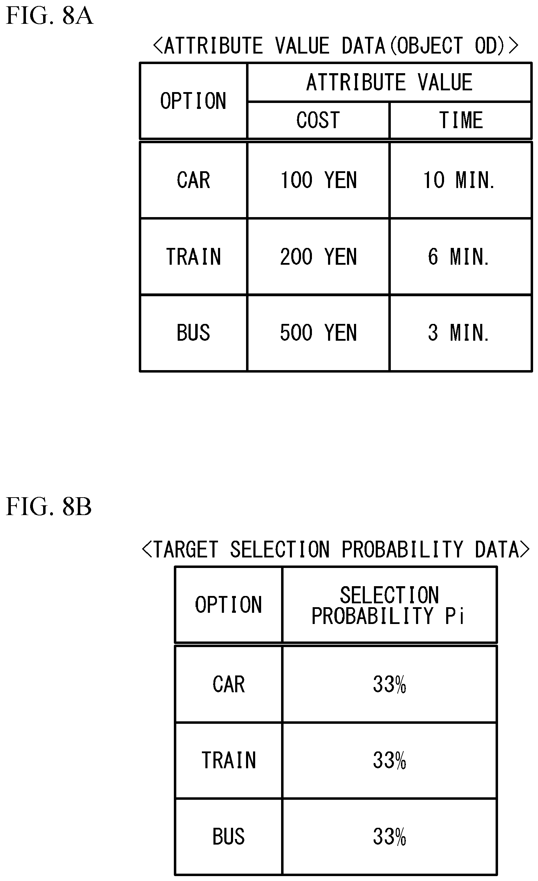

The target selection probability acquisition unit 30 acquires a target value of the selection probability of each option for a certain OD (object OD) input by the user. The data of the target value input by the user is target selection probability data illustrated in FIG. 8B.

The optimum billing amount calculation unit 32 acquires the attribute value data (see FIG. 8A) of each option for the object OD from the attribute value storage unit 42, and calculates the cost (toll) of the option (car) that causes the selection probability of each option to become the target value (see FIG. 8B). For example, in FIG. 7, it is assumed that the numerical values of the values output as results of inputting the attribute values of each option (car, train, bus) to the value calculation model are $V_1 = 25$, $V_2 = 15$, and $V_3 = 10$. In this case, the optimum billing amount calculation unit 32 calculates the selection probability $P_1$ of the option (can) by the relative evaluation equation presented by the following expression (1).

$$P_1 = V_1/(V_1 + V_2 + V_3) \qquad (1)$$

In the example illustrated in FIG. 7, $P_1$ is calculated as $25/(25 + 15 + 10) = 0.5 = 50\%$. The selection probabilities $P_2$ and $P_3$ of the option (train) and the option (bus) are also calculated as $P_2 = 30\%$ and $P_3 = 20\%$ by the same calculation. The optimum billing amount calculation unit 32 calculates the cost (optimum billing amount) of the option (car) such that the values of $P_1$, $P_2$, and $P_3$ match the target values. The optimum billing amount calculation unit 32 notifies the output unit 34 of the calculated optimum billing amount.

The output unit 34 outputs the optimum billing amount notified from the optimum billing amount calculation unit 32 to the display unit 93.

(Outline of Learning Performed by Model Learning Unit 28)

Here, an outline of learning of the model learning unit 28 will be described.

As illustrated in FIG. 7, the value calculation model used in the present embodiment is a model in which the attribute values of each option are input and the respective values of the options are output. Therefore, in order to learn the value calculation model, data of the combination of attribute values and a value is required as learning data. However, in the present embodiment, the numerical value of the value cannot be obtained as the observed value, and only the rate at which each option was actually selected (selection probability) can be obtained as the observed value. The numerical value of the selection probability does not always match the numerical value of the value (see FIG. 7), and since the calculation for obtaining the selection probability from the value (relative evaluation in FIG. 7) is an irreversible operation, it is impossible to obtain the value from the selection probability. Therefore, when the attribute values and the selection probabilities are simply used as the learning data, the parameters of the value calculation model cannot be machine-learned.

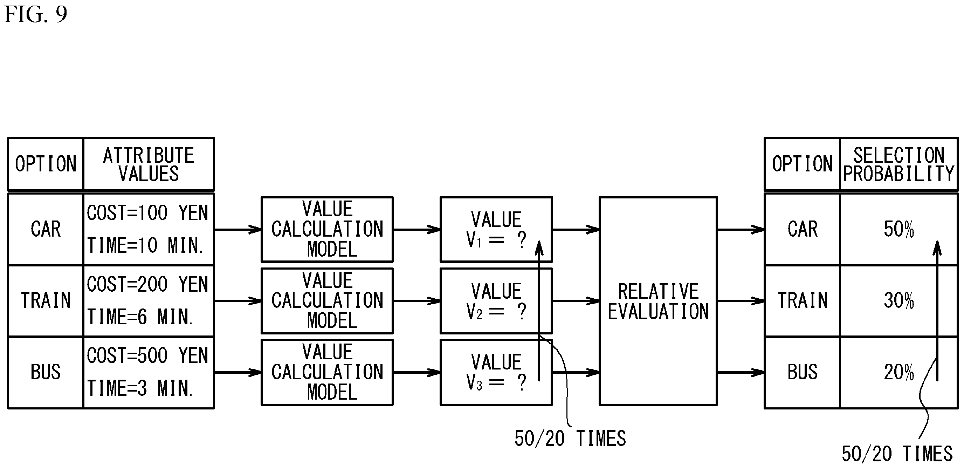

As a result of intensive studies, the inventor has focused on the fact that a relationship (ratio) between values can be obtained from the selection probabilities, which are observed values. For example, as illustrated in FIG. 9, the ratio of the selection probability of the option (car) to the selection probability of the option (bus) is 50/20 (times), but the ratio of the value of the option (car) to the value of the option (bus) is also 50/20 (times). Similarly, the ratio of the selection probability of the option (train) to the selection probability of the option (bus) is 30/20, and the ratio of the value of the option (train) to the value of the option (bus) is also 30/20. Based on the above-described findings, the inventor performed machine learning on a value calculation model such that a relationship (ratio) between values output from the value calculation model approaches a relationship (ratio) between selection probabilities.

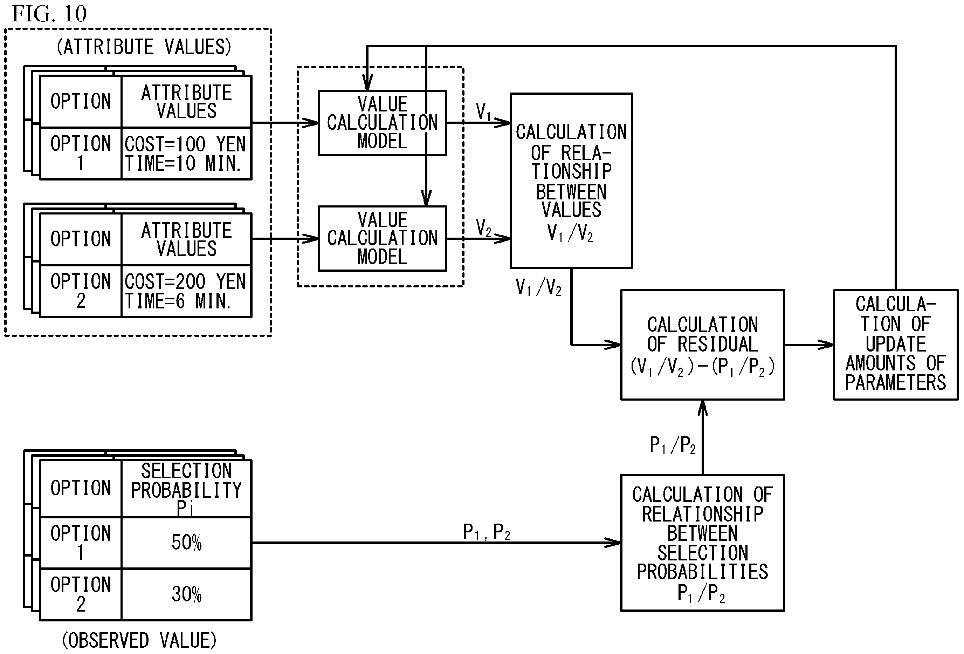

FIG. 10 illustrates an overview of a learning device of the model learning unit 28. As illustrated in FIG. 10, in the model learning unit 28, the attribute values of the two options included in the learning data (FIG. 6) are input to the value calculation model. Then, the model learning unit 28 calculates the relationship (ratio $V_1/V_2$) between the values $V_1$ and $V_2$ output from the value calculation model. In addition, the model learning unit 28 obtains a relationship (ratio $P_1/P_2$) between the selection probabilities $P_1$ and $P_2$, which are observed values. Then, the model learning unit 28 obtains a difference (residual $(V_1/V_2) - (P_1/P_2)$) between the relationship between the values (ratio $V_1/V_2$) and the relationship between the selection probabilities (ratio $P_1/P_2$). The model learning unit 28 obtains residuals using all pieces of learning data, and updates the parameters of the value calculation model so that the sum of all the residuals is equal to or less than a threshold value. In this manner, the model learning unit 28 can learn the value calculation model.

(Process Executed by Information Processing Apparatus 10)

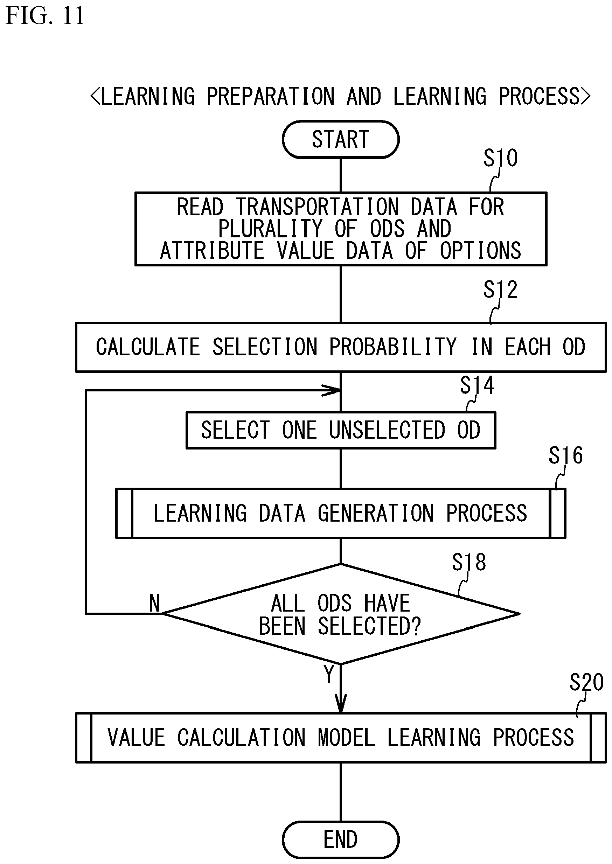

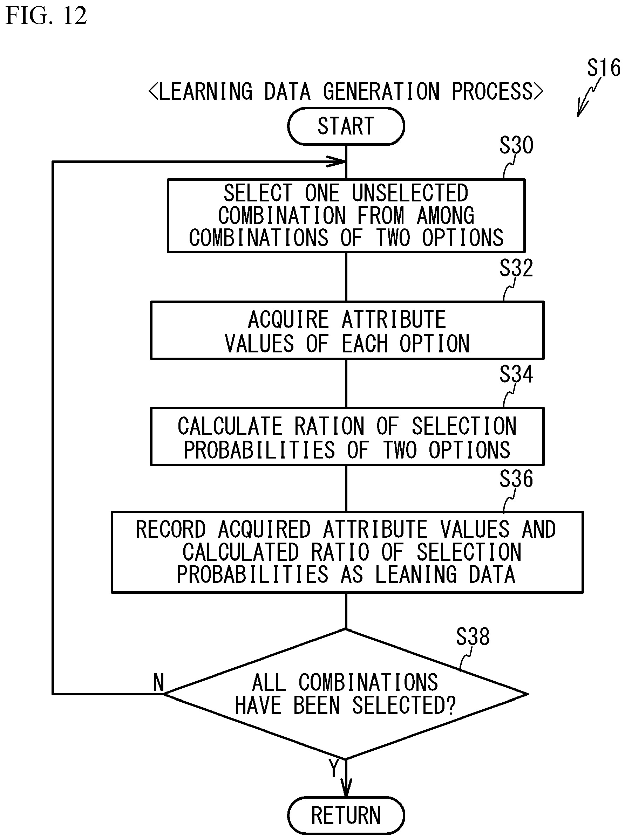

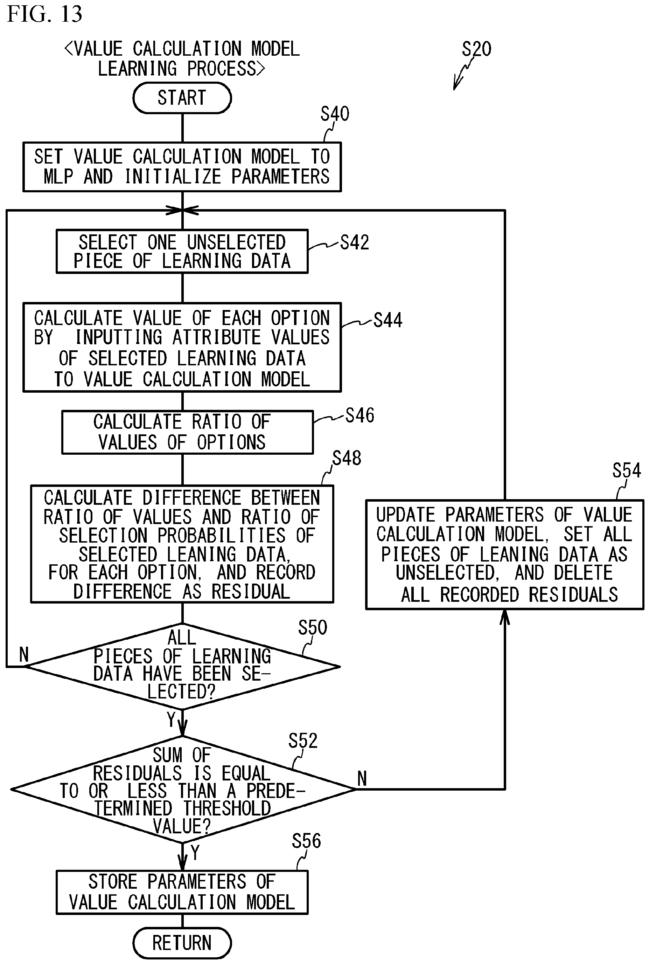

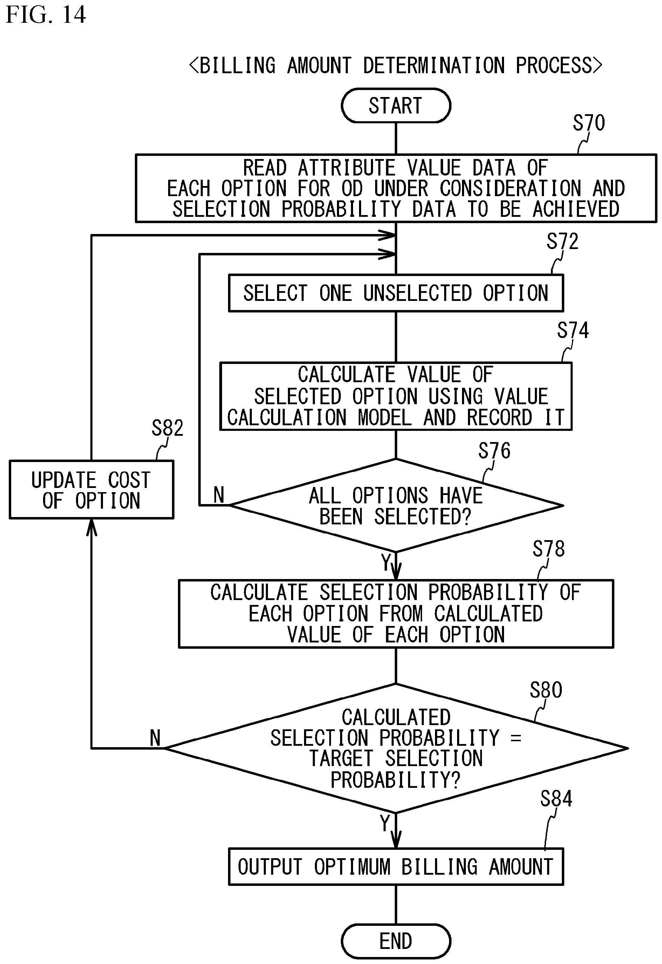

Next, a process executed by the information processing apparatus 10 will be described in detail. The information processing apparatus 10 executes the "learning preparation and learning process" illustrated in FIG. 11 (and FIG. 12 and FIG. 13) and the "billing amount determination process" illustrated in FIG. 14 using the value calculation model.

(Learning Preparation and Learning Process)

FIG. 11 is a flowchart illustrating the learning preparation and learning process of the value calculation model. The process illustrated in FIG. 11 is executed, for example, at predetermined time intervals or every time a predetermined amount of transportation data is stored.

When the process of FIG. 11 is started, first, in step S10, the transportation data acquisition unit 20 reads the transportation data (see FIG. 4A) for a plurality of ODs, and the attribute value acquisition unit 24 reads the attribute values (see FIG. 5) of options. The transportation data acquisition unit 20 transfers the read transportation data to the selection probability calculation unit 22. The attribute value acquisition unit 24 stores the read attribute value data in the attribute value storage unit 42.

Then, in step S12, the selection probability calculation unit 22 calculates the selection probability of each option in each OD with reference to the transportation date (FIG. 4A). The selection probability calculation unit 22 stores the selection probability data (FIG. 4B) in which the calculated selection probabilities of the respective options for the respective ODs are collected in the selection probability storage unit 40.

Then, in step S14, the learning data generation unit 26 selects one unselected OD. When there are three ODs (OD1 to OD3) as illustrated in FIG. 4A to FIG. 5, the learning data generation unit 26 selects one (for example, OD1) of the three ODs.

Then, in step S16, the learning data generation unit 26 executes a learning data generation process. In this step S16, a process according to the flowchart of FIG. 12 is executed.

(Learning Data Generation Process (S16))

In the process of FIG. 12, first, in step S30, the learning data generation unit 26 selects one unselected combination of two options. For example, the learning data generation unit 26 selects a combination of the option (car) and the option (bus).

Then, in step S32, the learning data generation unit 26 acquires respective attribute values of the two options. The learning data generation unit 26 refers to the attribute value storage unit 42 and acquires the attribute values (cost and time) of, for example, the option (car) and the option (bus) for OD1 from the attribute value data illustrated in FIG. 5.

Then, in step S34, the learning data generation unit 26 calculates the ratio of the selection probabilities of the two options. The learning data generation unit 26 refers to the selection probability storage unit 40, acquires, for example, the respective selection probabilities (50% and 17%) of the option (car) and the option (bus) for OD1 from the selection probability data in FIG. 4B, and calculates the ratio (50/17).

Then, in step S36, the learning data generation unit 26 records the acquired attribute values and the calculated ratio of the selection probabilities as the learning data. In the above example, the learning data generation unit 26 stores the data with the learning data ID = "001" in FIG. 6 in the learning data storage unit 44.

Then, in step S38, the learning data generation unit 26 determines whether all combinations of options have been selected. When the determination at step S38 is negative, the process returns to step S30, and the processes in and after step S30 are repeatedly executed. On the other hand, when the determination in step S38 is affirmative, the process proceeds to step S18 of FIG. 11.

In step S18 of FIG. 11, the learning data generation unit 26 determines whether all ODs have been selected. When the determination in step S18 is negative, the process returns to step S14, and the processes in steps S14 and S16 are repeatedly executed. On the other hand, when the determination in step S18 is affirmative, the process proceeds to step S20. At the stage of proceeding to step S20, all pieces of the learning data in FIG. 6 are ready.

In step S20, the model learning unit 28 executes a value calculation model learning process. In this step S20, a process according to the flowchart of FIG. 13 is executed.

(Value Calculation Model Learning Process (Step S20))

When the process of FIG. 13 is started, first, in step S40, the model learning unit 28 sets the value calculation model to MLP and initializes the parameters.

Then, when the process proceeds to step S42, the model learning unit 28 selects one unselected piece of the learning data. For example, the model learning unit 28 selects the learning data that is in the top (learning data ID = 001) in FIG. 6.

Then, in step S44, the model learning unit 28 inputs the attribute values of the selected piece of the learning data to the value calculation model, and calculates the respective values ($V_1$ and $V_2$ in FIG. 10) of the options.

Then, in step S46, the model learning unit 28 calculates the ratio ($V_1/V_2$) of the values of the options.

Then, in step S48, the model learning unit 28 calculates a difference (($V_1/V_2$) - ($P_1/P_2$)) between the ratio of the values of the options and the ratio of the selection probabilities of the selected piece of the learning data and records the difference as a residual.

Then, in step S50, the model learning unit 28 determines whether all pieces of the learning data have been selected. When the determination in step S50 is negative, the process returns to step S42, and the processes in steps S42 to S50 are repeatedly executed until the residuals of all the pieces of the learning data are calculated. On the other hand, when the determination in step S50 is affirmative, the model learning unit 28 proceeds to step S52.

In step S52, the model learning unit 28 determines whether the sum of the residuals calculated in step S48 is equal to or less than the threshold value. When the determination in step S52 is negative, it is necessary to adjust the value calculation model, and thus the process proceeds to step S54.

In step S54, the model learning unit 28 updates the parameters of the value calculation model. In addition, the model learning unit 28 sets all the pieces of the learning data as unselected and deletes all the recorded residuals. Thereafter, the model learning unit 28 repeatedly executes the processes of steps S42 to S54 using the updated value calculation model. Then, when the sum of the residuals becomes equal to or less than the threshold value, the determination in step S52 becomes affirmative, and the model learning unit 28 proceeds to step S56.

In step S56, the model learning unit 28 stores the parameters of the value calculation model in the model parameter storage unit 46. Thus, the process of FIG. 13 is completed, and the entire process of FIG. 11 is also completed.

(Billing Amount Determination Process)

Next, the billing amount determination process will be described with reference to the flowchart of FIG. 14. The billing amount determination process is a process for determining a toll of a road using the value calculation model learned by the learning process of FIG. 11. For example, it is assumed that the user selects "OD1" as the OD to be considered (object OD). In addition, it is assumed that the user inputs the target selection probability data illustrated in FIG. 8B as information about target selection probabilities. In this case, the optimum billing amount calculation unit 32 calculates the cost of the option "car" so that the selection probability of each option for OD1 matches the corresponding selection probability of FIG. 8B, and outputs the calculated cost as the optimum billing amount.

When the process of FIG. 14 is started, first, in step S70, the optimum billing amount calculation unit 32 reads the attribute values of each option for the OD (for example, OD1) under consideration and the selection probability data to be achieved (the target selection probability data). The optimum billing amount calculation unit 32 reads the target selection probability data (FIG. 8B) input by the user through the target selection probability acquisition unit 30.

Then, in step S72, the optimum billing amount calculation unit 32 selects one unselected option. For example, the optimum billing amount calculation unit 32 selects the option (car) from the option (car), the option (train), and the option (bus).

Then, in step S74, the optimum billing amount calculation unit 32 calculates the value of the selected option using the value calculation model that has been learned through the processes of FIG. 11 to FIG. 13, and stores the calculated value.

Then, in step S76, the optimum billing amount calculation unit 32 determines whether all option have been selected. When the determination in step S76 is negative, the process returns to step S72, and the processes in steps S72 to S76 are repeated until the values of all the options are calculated. When the determination in step S76 is affirmative, the optimum billing amount calculation unit 32 proceeds to step S78.

In step S78, the optimum billing amount calculation unit 32 calculates (estimates) the selection probability of each option from the calculated value of each option. Specifically, the optimum billing amount calculation unit 32 calculates (estimates) the selection probability of each option using the above equation (1).

Then, in step S80, the optimum billing amount calculation unit 32 determines whether the calculated selection probability matches the target selection probability. When the difference between the calculated selection probability and the target selection probability falls within a predetermined range, the optimum billing amount calculation unit 32 may determine that the calculated selection probability and the target selection probability match each other. When the determination in step S80 is negative, the process proceeds to step S82, the optimum billing amount calculation unit 32 updates the cost of the option (car), and the process returns to step S72. Thereafter, the optimum billing amount calculation unit 32 repeats the processes in and after step S72 until the determination in step S80 becomes affirmative, and when the determination in step S80 becomes affirmative, the process proceeds to step S84.

In step S84, the output unit 34 outputs the cost of the option (car) when the determination in step S80 is affirmative as the optimum billing amount. By checking the output optimum billing amount, the user can confirm how much the toll for the car is appropriate in order to match the selection probability of each option with the corresponding target selection probability.

As described above in detail, the information processing apparatus 10 of the present embodiment acquires the selection probability of each option that can be used when a person moves between OD, and the data (FIG. 4B and FIG. 5) of the attribute values of each option when the selection probability is obtained. In addition, the information processing apparatus 10 calculates the relationship (ratio) between the selection probabilities of the options for each combination of two options that can be extracted from a plurality of options. Then, the information processing apparatus 10 adjusts (learns) the value calculation model so that the relationship (ratio) between the values calculated when the attribute values of the options are input to the value calculation model and the relationship (ratio) between the selection probabilities approach each other. As a result, in the present embodiment, even when the numerical value of the value is not included in the learning data, the value calculation model can be learned from the ratio of the selection probabilities, which are observed values. In addition, by performing machine learning on the value calculation model, it is possible to obtain a value calculation model capable of accurately calculating the value of the option.

The value calculation model used in the present embodiment is a neural network (MLP or the like) in which inputs are the attribute values of each option and an output is the value of each option. This allows the user to automatically learn the value calculation model without previously assuming a linear equation or the like as the value calculation model.

In the present embodiment, the model learning unit 28 calculates the differences (residuals) between the relationships (ratio) between the values of the options obtained from the learning data (learning data IDs = 001 to 009) and the relationships (ratio) between the selection probabilities. Then, the model learning unit 28 adjusts the parameters of the value calculation model so that the sum of the differences is equal to or less than the threshold value (S42 to S54 in FIG. 13). Thus, it is possible to obtain a value calculation model capable of calculating the value of each option with high accuracy.

Further, in the present embodiment, the optimum billing amount calculation unit 32 calculates the value of each option by inputting the attribute values of each option to the value calculation model learned by the processes of FIG. 11 to FIG. 13 (S74 of FIG. 14). Then, the optimum billing amount calculation unit 32 calculates the selection probability of each option based on the calculated values of each option (S78). Thus, the selection probability of each option can be calculated with high accuracy.

Further, in the present embodiment, the optimum billing amount calculation unit 32 adjusts at least part of the attribute values of each option so that the estimated selection probability of each option approaches the corresponding target selection probability (S82). Accordingly, for example, by adjusting the cost of the option (car) so that the selection probability of the option (car) is reduced, it is possible to determine the optimum toll (road pricing) for eliminating the congestion of the road.

In the above-described embodiment, the optimum billing amount calculation unit 32 optimizes the toll of the road. However, this does not intend to suggest any limitation, and the fare (cost) of the train or the bus may be adjusted so that the selection probability of each option approaches the corresponding target selection probability. The options of transportation may include other options of transportation (a motorcycle, a ship, an airplane, or the like) in addition to or instead of at least one of a car, a train, or a bus.

(Variation)

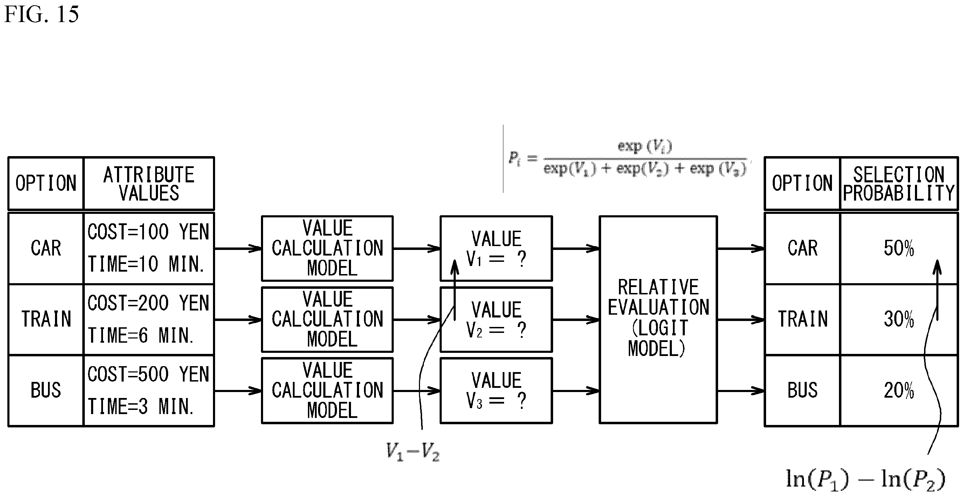

In the above-described embodiment, the case where the relative evaluation of FIG. 7 is performed based on the above equation (1) has been described, but this does not intend to suggest any limitation. For example, as illustrated in FIG. 15, a logit model frequently used in the behavior selection model can be used as the relative evaluation. When the logit model is used as the relative evaluation, the selection probability Pi of each option can be obtained from the following equation (2).

$$P_i = \frac{\exp\,(V_i)}{\exp(V_1) + \exp(V_2) + \exp\,(V_3)} \qquad (2)$$

In this case, the relationship between $P_1$ and $P_2$ can be expressed by the following equation (3).

$$\frac{P_1}{P_2} = \frac{\exp\,(V_1)}{\exp\,(V_2)}$$
$$\Leftrightarrow \ln(P_1) - \ln(P_2) = V_1 - V_2 \qquad (3)$$

From the above equation (3), it can be seen that when the logit model is used as the relative evaluation, the difference between the values can be used as the relationship between the values. Additionally, it can be seen that the value calculation model is to be learned so that the difference between the values approaches the relationship between the selection probabilities (the difference between the numerical values of the natural logarithms of the selection probabilities).

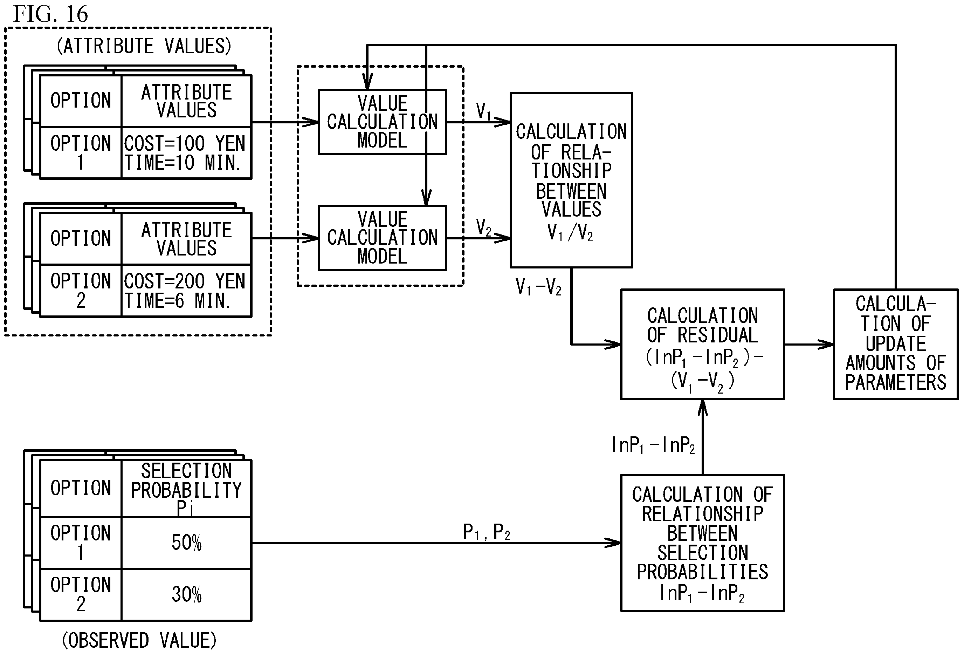

FIG. 16 illustrates an outline of a learning device of the model learning unit 28 in accordance with the present variation. As illustrated in FIG. 16, also in the present variation, the model learning unit 28 inputs the attribute values of two options to the value calculation model at the time of learning, similarly to the above-described embodiment. Then, the model learning unit 28 calculates the relationship between the values (difference ($V_1 - V_2$)) from the values $V_1$ and $V_2$ output from the value calculation model. In addition, the model learning unit 28 obtains the relationship ($\ln P_1 - \ln P_2$) between the selection probabilities $P_1$ and $P_2$ as observed values. Then, the model learning unit 28 obtains the difference (($\ln P_1 - \ln P_2$) - ($V_1 - V_2$)) between the relationship between the values ($V_1 - V_2$) and the relationship between the selection probabilities ($\ln P_1 - \ln P_2$). The model learning unit 28 obtains differences (residuals) using all pieces of learning data, and updates the parameters of the value calculation model so that the sum of the differences is equal to or less than the threshold value. In this manner, learning of the value calculation model can be performed also in the present variation.

In the case of the present variation, since the difference between $V_1$ and $V_2$ is used as presented in the above equation (3), the calculation can be performed even the numerical values of the values $V_1$ and $V_2$ are 0, for example. Accordingly, since the loss function of the machine learning does not have a singular point, calculation in the machine learning can be stabilized.

In the above-described embodiment, the case where the value calculation model is a model of a neural network such as an MLP has been described, but this does not intend to suggest any limitation. As the value calculation model, a linear equation such as $V = w_1 \times cost + w_2 \times time$ ($w_1$ and $w_2$ are weight coefficients, and V is value) may be used.

In the above-described embodiment, transportation options (car, train, bus) have been described as an example of the option used when people act, but this does not intend to suggest any limitation. There are various options used when people act, and for example, net shopping and an actual store used when people shop also correspond to options used when people act. That is, in a situation where a person selects an option from among a plurality of options when performing a certain action, when the value of each option and the selection probability of each option are obtained, the above-described embodiment can be appropriately modified and used. In the above-described embodiment, the case in which the attribute values are cost and time has been described, but the attribute values may be something other than cost or time.

In the above-described embodiment, the case in which the information processing apparatus 10 used by the user has the functions of FIG. 3 has been described, but this does not intend to suggest any limitation. For example, a server apparatus connected to the information processing apparatus 10 used by the user via a network or the like may have the functions of FIG. 3.

The above-described processing functions are implemented by a computer. In this case, a program in which processing details of the functions that a processing device is to have are written is provided. The aforementioned processing functions are implemented in the computer by the computer executing the program.

The program in which the processing details are written can be stored in a computer-readable recording medium (however, excluding carrier waves).

When the program is distributed, it may be sold in the form of a portable storage medium such as a digital versatile disc (DVD) or a compact disc read only memory (CD-ROM) storing the program. The program may be stored in a storage device of a server computer, and the program may be transferred from the server computer to another computer over a network.

A computer executing the program stores the program stored in a portable storage medium or transferred from a server computer in its own storage device. The computer then reads the program from its own storage device, and executes processes according to the program. The computer may directly read the program from a portable storage medium, and execute processes according to the program. Alternatively, the computer may successively execute a process, every time the program is transferred from a server computer, according to the received program.

Although the exemplary embodiments of the present invention have been illustrated in detail, the present invention is not limited to the above-mentioned embodiments, and other embodiments, variations and modifications may be made without departing from the scope of the present invention.

**Claims**

1. A learning method of a value calculation model for calculating a value of an option used when a person acts from an attribute value of the option, implemented by a computer, the learning method comprising:

   acquiring input data in which a selection probability indicating a rate at which each option is selected from a plurality of options and attribute values of the plurality of options when the selection probability is obtained are associated with each other (S10, S12); and
   acquiring, for each combination of two options that can be extracted from the plurality of options, a relationship between selection probabilities of the two options included in each combination from the input data, and adjusting the value calculation model so that a relationship between values calculated when attribute values of the two options included in each combination are input to the value calculation model and a relationship between the selection probabilities corresponding to each combination are close to each other (S20).

2. The learning method according to claim 1, wherein the value calculation model is a neural network having the attribute value as an input and the value as an output (S40).

3. The learning method according to claim 1 or 2, wherein the adjusting includes acquiring, for all combinations of two options that can be extracted from the plurality of options, a difference between a relationship between values of the two options included in a combination and a relationship between the selection probabilities corresponding to the combination, and adjusting the value calculation model so that a sum of differences of the all combinations is smaller than a predetermined value (S42 to S54).

4. The learning method according to any one of claims 1 to 3, wherein the relationship between the values is a ratio of one value to another value, and the relationship between the selection probabilities is a ratio of one selection probability to another selection probability.

5. The learning method according to any one of claims 1 to 4, wherein the relationship between the values is a difference between one value and another value, and the relationship between the selection probabilities is a difference between a numerical value of a natural logarithm of one selection probability and a numerical value of a natural logarithm of another selection probability.

6. A selection probability estimation method implemented by a computer, comprising:

   using the learning method according to any one of claims 1 to 5 to learn the value calculation model;
   calculating values of a plurality of options by inputting attribute values of the plurality of options to the value calculation model (S72 to S76); and
   estimating a selection probability of each option based on calculated values of the plurality of options (S78).

7. The selection probability estimation method according to claim 6, further comprising adjusting at least part of attribute values of the plurality of options so that the estimated selection probability of each option approaches a target selection probability (S82).

8. A learning program of a value calculation model that causes a computer to execute a process, the value calculation model being for calculating a value of an option used when a person acts from an attribute value of the option, the process comprising:

acquiring input data in which a selection probability indicating a rate at which each option is selected from a plurality of options and attribute values of the plurality of options when the selection probability is obtained are associated with each other (S10, S12); and

acquiring, for each combination of two options that can be extracted from the plurality of options, a relationship between selection probabilities of the two options included in each combination from the input data, and adjusting the value calculation model so that a relationship between values calculated when attribute values of the two options included in each combination are input to the value calculation model and a relationship between the selection probabilities corresponding to each combination are close to each other (S20).

FIG. 1A

OPTION (CAR)

DESTINATION (D)

OPTION
(TRAIN)

ORIGIN (O)

OPTION (BUS)

FIG. 1B

| OPTION | ATTRIBUTE VALUES | SELECTION PROBABILITY |
|--------|------------------|------------------------|
| CAR | COST=0 YEN TIME=60 MIN. | 50% |
| TRAIN | COST=300 YEN TIME=3 MIN. | 30% |
| BUS | COST=200 YEN TIME=10 MIN. | 20% |

⇩

FIG. 1C

| OPTION | ATTRIBUTE VALUES | SELECTION PROBABILITY |
|--------|------------------|------------------------|
| CAR | COST=?? YEN TIME=?? MIN. | 33% |
| TRAIN | COST=300 YEN TIME=3 MIN. | 33% |
| BUS | COST=200 YEN TIME=10 MIN. | 33% |

FIG. 2

FIG. 3

```
┌─────────────────┐ 20      ┌─────────────────┐ 24      ┌─────────────────┐ 30
│ TRANSPORTATION  │         │ ATTRIBUTE VALUE │         │ TARGET SELECTION│
│ DATA ACQUISITION│         │ ACQUISITION UNIT│         │  PROBABILITY    │
│      UNIT       │         │                 │         │ ACQUISITION UNIT│
└─────────────────┘         └─────────────────┘         └─────────────────┘
         │                           │                           │
┌─────────────────┐ 22      ┌─────────────────┐ 42                │
│   SELECTION     │         │   ATTRIBUTE     │                   │
│  PROBABILITY    │         │ VALUE STORAGE   │                   │
│CALCULATION UNIT │         │     UNIT        │                   │
└─────────────────┘         └─────────────────┘                   │
         │                           │                            │
┌─────────────────┐ 40      ┌─────────────────┐ 26                │
│   SELECTION     │         │ LEARNING DATA   │                   │
│  PROBABILITY    │─────────│ GENERATION UNIT │                   │
│  STORAGE UNIT   │         │                 │                   │
└─────────────────┘         └─────────────────┘                   │
                                     │                            │
                            ┌─────────────────┐ 44                │
                            │    LEARNING     │                   │
                            │ DATA STORAGE    │                   │
                            │     UNIT        │                   │
                            └─────────────────┘                   │
                                     │                            │
                            ┌─────────────────┐ 28                │
                            │ MODEL LEARNING  │                   │
                            │     UNIT        │                   │
                            └─────────────────┘                   │
                                     │                            │
                            ┌─────────────────┐ 46      ┌─────────────────┐ 32
                            │     MODEL       │         │ OPTIMUM BILLING │
                            │   PARAMETER     │─────────│     AMOUNT      │
                            │  STORAGE UNIT   │         │ CALCULATION UNIT│
                            └─────────────────┘         └─────────────────┘
                                                                 │
                                                        ┌─────────────────┐ 34
                                                        │   OUTPUT UNIT   │
                                                        │                 │
                                                        └─────────────────┘
```

## FIG. 4A

<TRANSPORTATION DATA>

| OD1 | | OD2 | | OD3 | |
|---|---|---|---|---|---|
| PERSON- AL ID | SELECTED OPTION | PERSONAL ID | SELECTED OPTION | PERSONAL ID | SELECTED OPTION |
| 001 | CAR | 007 | CAR | 013 | CAR |
| 002 | CAR | 008 | TRAIN | 014 | CAR |
| 003 | TRAIN | 009 | TRAIN | 015 | TRAIN |
| 004 | BUS | 010 | BUS | 016 | BUS |
| 005 | TRAIN | 011 | TRAIN | 017 | CAR |
| 006 | CAR | 012 | CAR | 018 | CAR |

## FIG. 4B

<SELECTION PROBABILITY DATA>

| OPTION | OD1 | OD2 | OD3 |
|---|---|---|---|
| | SELECTION PROBABILITY Pi | SELECTION PROBABILITY Pi | SELECTION PROBABILITY Pi |
| CAR | 50% | 33% | 66% |
| TRAIN | 33% | 50% | 17% |
| BUS | 17% | 17% | 17% |

FIG. 5

<ATTRIBUTE VALUE DATA>

| OP-<br>TION | OD1 | | OD2 | | OD3 | |
|---|---|---|---|---|---|---|
| | ATTRIBUTE VALUES | | ATTRIBUTE VALUES | | ATTRIBUTE VALUES | |
| | COST | TIME | COST | TIME | COST | TIME |
| CAR | 100 YEN | 10 MIN. | 200 YEN | 8 MIN. | 100 YEN | 5 MIN. |
| TRAIN | 200 YEN | 6 MIN. | 100 YEN | 15 MIN. | 400 YEN | 8 MIN. |
| BUS | 500 YEN | 3 MIN. | 500 YEN | 3 MIN. | 500 YEN | 3 MIN. |

## FIG. 6

<LEARNING DATA>

| LEARNING DATA ID | ATTRIBUTE VALUES | | | | RATIO OF SELECTION PROBABILITIES | DATA SOURCE (REMARKS) |
|---|---|---|---|---|---|---|
| | OPTION 1 COST | OPTION 2 COST | OPTION 1 TIME | OPTION 2 TIME | | |
| 001 | 100 YEN | 500 YEN | 10 MIN. | 3 MIN. | 50/17 | OD1 CAR/BUS |
| 002 | 100 YEN | 200 YEN | 10 MIN. | 6 MIN. | 50/33 | OD1 CAR/TRAIN |
| 003 | 500 YEN | 200 YEN | 3 MIN. | 6 MIN. | 17/33 | OD1 BUS/TRAIN |
| 004 | 200 YEN | 500 YEN | 8 MIN. | 3 MIN. | 33/17 | OD2 CAR/BUS |
| 005 | 200 YEN | 100 YEN | 8 MIN. | 15 MIN. | 33/50 | OD2 CAR/TRAIN |
| 006 | 500 YEN | 100 YEN | 3 MIN. | 15 MIN. | 17/50 | OD2 BUS/TRAIN |
| 007 | 100 YEN | 500 YEN | 5 MIN. | 3 MIN. | 66/17 | OD3 CAR/BUS |
| 008 | 100 YEN | 400 YEN | 5 MIN. | 8 MIN. | 66/17 | OD3 CAR/TRAIN |
| 009 | 500 YEN | 400 YEN | 3 MIN. | 8 MIN. | 17/17 | OD3 BUS/TRAIN |

FIG. 7

| OPTION | ATTRIBUTE VALUES |
|--------|------------------|
| CAR | COST=100 YEN<br>TIME=10 MIN. |
| TRAIN | COST=200 YEN<br>TIME=6 MIN. |
| BUS | COST=500 YEN<br>TIME=3 MIN. |

VALUE CALCULATION MODEL → VALUE $V_1 = 25$

VALUE CALCULATION MODEL → VALUE $V_2 = 15$

VALUE CALCULATION MODEL → VALUE $V_3 = 10$

RELATIVE EVALUATION

| OPTION | SELECTION PROBABILITY |
|--------|----------------------|
| CAR | 50% |
| TRAIN | 30% |
| BUS | 20% |

FIG. 8A

<ATTRIBUTE VALUE DATA(OBJECT OD)>

| OPTION | ATTRIBUTE VALUE | |
|---|---|---|
| | COST | TIME |
| CAR | 100 YEN | 10 MIN. |
| TRAIN | 200 YEN | 6 MIN. |
| BUS | 500 YEN | 3 MIN. |

FIG. 8B

<TARGET SELECTION PROBABILITY DATA>

| OPTION | SELECTION PROBABILITY $P_i$ |
|---|---|
| CAR | 33% |
| TRAIN | 33% |
| BUS | 33% |

FIG. 9

| OPTION | ATTRIBUTE VALUES |
|---|---|
| CAR | COST=100 YEN<br>TIME=10 MIN. |
| TRAIN | COST=200 YEN<br>TIME=6 MIN. |
| BUS | COST=500 YEN<br>TIME=3 MIN. |

VALUE CALCULATION MODEL

VALUE $V_1 = ?$
VALUE $V_2 = ?$
VALUE $V_3 = ?$

50/20 TIMES

RELATIVE EVALUATION

| OPTION | SELECTION PROBABILITY |
|---|---|
| CAR | 50% |
| TRAIN | 30% |
| BUS | 20% |

50/20 TIMES

FIG. 10

(ATTRIBUTE VALUES)

| OPTION | ATTRIBUTE VALUES |
|--------|------------------|
| OPTION 1 | COST=100 YEN TIME=10 MIN. |

| OPTION | ATTRIBUTE VALUES |
|--------|------------------|
| OPTION 2 | COST=200 YEN TIME=6 MIN. |

VALUE CALCULATION MODEL

VALUE CALCULATION MODEL

$V_1$

$V_2$

CALCULATION OF RELA-TIONSHIP BETWEEN VALUES $V_1/V_2$

$V_1/V_2$

CALCULATION OF RESIDUAL $(V_1/V_2)-(P_1/P_2)$

CALCULA-TION OF UPDATE AMOUNTS OF PARAMETERS

$P_1/P_2$

| OPTION | SELECTION PROBABILITY $P_i$ |
|--------|------------------------------|
| OPTION 1 | 50% |
| OPTION 2 | 30% |

(OBSERVED VALUE)

$P_1, P_2$

CALCULATION OF RELATIONSHIP BETWEEN SELECTION PROBABILITIES $P_1/P_2$

FIG. 11

<LEARNING PREPARATION AND LEARNING PROCESS>

```
              ( START )
                  │            S10
   ┌──────────────────────────────────┐
   │  READ TRANSPORTATION DATA FOR     │
   │      PLURALITY OF ODS AND         │
   │  ATTRIBUTE VALUE DATA OF OPTIONS  │
   └──────────────────────────────────┘
                  │            S12
   ┌──────────────────────────────────┐
   │ CALCULATE SELECTION PROBABILITY IN EACH OD │
   └──────────────────────────────────┘
                  │            S14
      ┌───────────────────────────┐
      │  SELECT ONE UNSELECTED OD  │
      └───────────────────────────┘
                  │            S16
   ┌──────────────────────────────────┐
   │ LEARNING DATA GENERATION PROCESS  │
   └──────────────────────────────────┘
                  │            S18
         N      ◇ ALL ODS HAVE ◇
       ◇─────────  BEEN SELECTED?
                  │ Y          S20
   ┌──────────────────────────────────┐
   │ VALUE CALCULATION MODEL LEARNING PROCESS │
   └──────────────────────────────────┘
                  │
               ( END )
```

FIG. 12

<LEARNING DATA GENERATION PROCESS>    S16

START

S30

SELECT ONE UNSELECTED
COMBINATION FROM AMONG
COMBINATIONS OF TWO OPTIONS

S32

ACQUIRE ATTRIBUTE
VALUES OF EACH OPTION

S34

CALCULATE RATION OF SELECTION
PROBABILITIES OF TWO OPTIONS

S36

RECORD ACQUIRED ATTRIBUTE VALUES AND
CALCULATED RATIO OF SELECTION
PROBABILITIES AS LEANING DATA

S38

N    ALL COMBINATIONS
HAVE BEEN SELECTED?

Y

RETURN

FIG. 13

<VALUE CALCULATION MODEL LEARNING PROCESS>

START

S40: SET VALUE CALCULATION MODEL TO MLP AND INITIALIZE PARAMETERS

S42: SELECT ONE UNSELECTED PIECE OF LEARNING DATA

S44: CALCULATE VALUE OF EACH OPTION BY INPUTTING ATTRIBUTE VALUES OF SELECTED LEARNING DATA TO VALUE CALCULATION MODEL

S46: CALCULATE RATIO OF VALUES OF OPTIONS

S48: CALCULATE DIFFERENCE BETWEEN RATIO OF VALUES AND RATIO OF SELECTION PROBABILITIES OF SELECTED LEANING DATA, FOR EACH OPTION, AND RECORD DIFFERENCE AS RESIDUAL

S50: ALL PIECES OF LEARNING DATA HAVE BEEN SELECTED? — N

S52: SUM OF RESIDUALS IS EQUAL TO OR LESS THAN A PREDETERMINED THRESHOLD VALUE? — N

S54: UPDATE PARAMETERS OF VALUE CALCULATION MODEL, SET ALL PIECES OF LEANING DATA AS UNSELECTED, AND DELETE ALL RECORDED RESIDUALS

S56: STORE PARAMETERS OF VALUE CALCULATION MODEL

RETURN

S20

FIG. 14

<BILLING AMOUNT DETERMINATION PROCESS>

```
                    ┌──────────┐
                    │  START   │
                    └──────────┘
                          │                        S70
    ┌─────────────────────────────────────────────────────┐
    │              READ ATTRIBUTE VALUE DATA OF            │
    │    EACH OPTION FOR OD UNDER CONSIDERATION AND        │
    │    SELECTION PROBABILITY DATA TO BE ACHIEVED         │
    └─────────────────────────────────────────────────────┘
                          │                        S72
              ┌─────────────────────────────────┐
              │   SELECT ONE UNSELECTED OPTION   │
              └─────────────────────────────────┘
                          │                        S74
              ┌─────────────────────────────────┐
              │        CALCULATE VALUE OF        │
              │   SELECTED OPTION USING VALUE    │
              │  CALCULATION MODEL AND RECORD IT │
              └─────────────────────────────────┘
                          │                        S76
                        ◇ ALL OPTIONS HAVE ◇  N
                        ◇ BEEN SELECTED?  ◇──────┐
                          │ Y
                          ▼                        S78
    ┌─────────────────────────────────────────────────────┐
    │      CALCULATE SELECTION PROBABILITY OF             │
    │       EACH OPTION FROM CALCULATED                   │
    │       VALUE OF EACH OPTION                          │
    └─────────────────────────────────────────────────────┘
                          │                        S80
   N    ◇        CALCULATED            ◇
  ┌─────◇ SELECTION PROBABILITY =      ◇
  │     ◇   TARGET SELECTION           ◇
  │     ◇      PROBABILITY?            ◇
  │                │ Y                       S84
  │     ┌─────────────────────────────────┐
  │     │  OUTPUT OPTIMUM BILLING AMOUNT   │
  │     └─────────────────────────────────┘
  │                │
  │          ┌──────────┐
  │          │   END    │
  │          └──────────┘
```

S82

UPDATE COST
OF OPTION

FIG. 15

| OPTION | ATTRIBUTE VALUES |
|--------|------------------|
| CAR | COST=100 YEN TIME=10 MIN. |
| TRAIN | COST=200 YEN TIME=6 MIN. |
| BUS | COST=500 YEN TIME=3 MIN. |

VALUE CALCULATION MODEL

VALUE CALCULATION MODEL

VALUE CALCULATION MODEL

VALUE $V_1 = ?$

VALUE $V_2 = ?$

VALUE $V_3 = ?$

$V_1 - V_2$

RELATIVE EVALUATION (LOGIT MODEL)

$$P_i = \frac{\exp(V_i)}{\exp(V_1) + \exp(V_2) + \exp(V_3)}$$

| OPTION | SELECTION PROBABILITY |
|--------|------------------------|
| CAR | 50% |
| TRAIN | 30% |
| BUS | 20% |

$\ln(P_1) - \ln(P_2)$

FIG. 16

EP 4 283 540 A1

Europäisches Patentamt

European Patent Office

Office européen des brevets

## EUROPEAN SEARCH REPORT

Application Number

EP 23 15 7950

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 326 919 A (UNIV SOUTHEAST) 31 August 2021 (2021-08-31) * the whole document * | 1-8 | INV. G06Q10/04 |
| X | US 2020/012956 A1 (IKEDA TAKURO [JP] ET AL) 9 January 2020 (2020-01-09) * paragraph [0011] * * paragraphs [0047] – [0060] * * paragraphs [0074] – [0085] * * paragraphs [0102] – [0137] * | 1-8 | |
| X | US 2014/365250 A1 (IKEDA TAKURO [JP] ET AL) 11 December 2014 (2014-12-11) * paragraph [0005] * * paragraphs [0041] – [0046] * * paragraph [0065] * * paragraphs [0104] – [0113] * | 1-8 | |

TECHNICAL FIELDS SEARCHED (IPC)

G06Q

The present search report has been drawn up for all claims

| Place of search | Date of completion of the search | Examiner |
|---|---|---|
| Munich | 29 September 2023 | Aguilar, José María |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 15 7950**

This annex lists the patent family members relating to the patent documents cited in the above-mentioned European search report.
The members are as contained in the European Patent Office EDP file on
The European Patent Office is in no way liable for these particulars which are merely given for the purpose of information.

**29-09-2023**

| Patent document cited in search report | | Publication date | Patent family member(s) | | Publication date |
|---|---|---|---|---|---|
| CN 113326919 | A | 31-08-2021 | NONE | | |
| US 2020012956 | A1 | 09-01-2020 | JP | 6795090 B2 | 02-12-2020 |
| | | | JP | WO2018198323 A1 | 05-03-2020 |
| | | | US | 2020012956 A1 | 09-01-2020 |
| | | | WO | 2018198323 A1 | 01-11-2018 |
| US 2014365250 | A1 | 11-12-2014 | JP | 6823907 B2 | 03-02-2021 |
| | | | JP | 2014238831 A | 18-12-2014 |
| | | | SG | 10201402627X A | 29-01-2015 |
| | | | US | 2014365250 A1 | 11-12-2014 |

EPO FORM P0459

For more details about this annex : see Official Journal of the European Patent Office, No. 12/82

**EP 4 283 540 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015114988 A